# EUROPEAN PATENT SPECIFICATION

(11) **EP 1 479 204 B1**
(45) Date of publication and mention of the grant of the patent: **20.07.2005**
(21) Application number: 03737330.5
(22) Date of filing: 03.02.2003
(51) Int. Cl.: H04L 12/56

(54) **A SYSTEM TO OBTAIN VALUE-ADDED SERVICES IN REAL-TIME, BASED ON THE GENERAL PACKET RADIO SERVICE (GPRS) NETWORK**
SYSTEM ZUM ERREICHEN VON AUF EINEM GPRS-NETZ BASIERTEN ECHTZEITMEHRWERTDIENSTEN
SYSTEME PERMETTANT D'OBTENIR DES SERVICES A VALEUR AJOUTEE EN TEMPS REEL, BASE SUR LE RESEAU DU SYSTEME GENERAL DE RADIOCOMMUNICATION PAR PAQUETS (GPRS)

(30) Priority: 04.02.2002 ES 200200259
(43) Date of publication of application: 24.11.2004
(73) Proprietor: Netspira Networks, S.L., 28001 Madrid (ES); Vodafone Group PLC, Newbury, Berkshire RG14 1JX (GB)
(72) Inventor: GARCIA CADARSO, Ramon, E-28100 Alcobendas - Madrid (ES); GARCIA ROBLES, Ana, Avda. Europea, 1, E-28100 Alcobendas - Madrid (ES); CAMUNAS JURADO, Miguel, Angel, E-28100 Alcobendas - Madrid (ES); LOPEZ SERRANO, Guillermo, E-28100 Alcobendas - Madrid (ES); LOPEZ SERRANO, José, E-28100 Alcobendas - Madrid (ES)
(74) Representative: Elzaburu, Alberto de
(86) International application number: PCT/EP2003/001519
(87) International publication number: WO 2003/067830

(56) References cited:
- EP-A- 1 087 312
- WO-A-99/17499

## Description

### OBJECT OF THE INVENTION

The present invention, as stated in the title of this description, consists of a system which allows obtaining value-added services in real-time using the general packet radio service (GPRS) network, transparently for the GPRS network.

The invention can be applied in any GPRS system using the GTP (GPRS Tunneling Protocol) standard protocol, such as the GPRS systems used in GSM and UMTS networks.

### BACKGROUND OF THE INVENTION

GPRS is a data transport service used in several cellular mobile telephony systems, and especially in GSM and UMTS systems, in order to allow access from a mobile station to a data packet network (such as the Internet) that uses packet switching instead of circuit switching. Just as in the GSM voice service, it is often necessary to add value-added services in real-time in the GPRS data service. Value-added service for GPRS means a service that provides something more than the basic data transport service. Service in real-time for GPRS means a service that processes GPRS data sessions at the time they are established or while being established, and not later, so that the sent data can be modified in some way. As an example, it can be mentioned that a value-added service in real-time for GPRS would be that in which data sending is subject to a prepayment, so that it can be verified, previous to the establishment of the GPRS data session, that the user trying to send the data has enough balance, and during the course of the session, small amounts of his balance are reserved before forwarding any traffic, the data traffic that the user tries to send is measured, the corresponding rate is applied and charged to the small amounts reserved, and the session is torn down just as the total balance is exhausted.

The implementation of the GPRS service in GSM and UMTS networks is specified and standardized by the 3GPP (Third Generation Partnership Project) organization. The GPRS service requires adaptations in mobile stations, in the radio system and in the operator core network. In particular (according to standards 3GPP TS 03.60 and 3GPP TS 23.060), it is necessary to incorporate two new types of data packet switching nodes:
■ SGSN (Serving GPRS Support Node), which is in charge of the radio access management, the mobile station localization, and acting as gateway between the radio part and the operator core data network.
■ GGSN (Gateway GPRS Support Node), which is the gateway between the operator data core network and the external data networks which the GPRS allows access to, such as the Internet or a corporate "intranet" (internal data network of a company).

Therefore, the SGSN consists in an interface of the GPRS system with the operator GSM radio infrastructure, and the GGSN node constitutes an interface with the external networks, such as the Internet network.

In the GSM and UMTS systems that incorporate the GPRS service, the GPRS data sessions go through an SGSN, an operator core data network based on the IP protocol (IETF RFC 791), and a GGSN. The protocol used to transfer information between an SGSN and a GGSN is the GTP protocol, which is specified in the standards 3GPP TS 09.60 and 3GPP TS 29.060. The GTP protocol is mainly used for transmitting the data packets of the GPRS mobile user between the SGSN and the GGSN inside a GTP tunnel. Each data session of a GPRS user is called a "PDP context". The GTP protocol includes signaling messages and data transport messages. The signaling messages permit the establishment, updating and release of the GTP tunnel associated to each PDP Context. The GTP data transport messages are used for tunneling the user data packets so they can be carried through the operator core data network without address conflicts. Each GTP tunnel, always associated to a "PDP Context", is identified by means of a "Tunnel ID" parameter, which is present in the header of all the GTP messages related to it.

Moreover, the CAMEL Phase 3 system (specified in the standards 3GPP TS 22.078, 3GPP TS 23.078, and 3GPP TS 29.078) is known in the state of the art that allows the implementation of value-added services in real-time for GPRS. These services are based on adding a functional module to the SGSN nodes which is called GPRS SSF, which permits the analysis of each data session at the moment of activation and during its course. It also allows stopping the sessions and querying external nodes, called SCP (Service Control Point), through a standardized protocol. These external nodes, that can have a large capacity for data processing and storage, starting from the queries from the GPRS network, can command the network to send them additional data, to change data of the session in process, to cut the sessions, and to perform many other functions. In this way, by means of the GPRS system specifications, many value-added services in real-time can be implemented. Two possible disadvantages of the CAMEL phase 3 system are, firstly, that the possible services are limited to what is stated in the CAMEL Phase 3 specification that does not permit, for example, implementing services in terms of the content of the user data, and, secondly, that requires the use of very complex nodes such as the SCP adapted to CAMEL Phase 3.

In the state of the art, the service nodes are also known, defined in recommendation ITU-T Q.1205, of the International Telecommunications Union, which are frequently used to implement value-added services in real-time in the voice telephony service. In this case, the calls to be handled are diverted in such a way that they go through a service node, which is basically a switching point that allows processing the calls going through it and then implements the required services. This system has the disadvantage that the call or session must go through the service node. Moreover, the service nodes are, in principle, designed for services for voice telephony.

Finally, it is possible to mention within the state of the art systems called "sniffer", capable of connecting to a network and analyzing all the traffic forwarded, without any modification. A disadvantage of these nodes is that they must be placed at all those points of a network where the traffic goes through. Another disadvantage is that these nodes are not capable of interacting with the starting and finishing points of the traffic.

D1 (WO 99 17499 A) teaches a method for intercepting traffic between a GGSN node and a SGSN node of a GPRS telecommunication network. A legal interception node LIN is connected between both SGSN and GGSN nodes such that in response to an order from a law enforcement authority LEA node, the LIN node intercepts GTP messages traffics originating from a mobile unit and sends to the LEA node.

D2 (EP 1087 312) discloses a game sponsoring gateway routes game requests to a game server and responds by supplying the requested game. Game sponsoring gateway is connected to a subscriber via GPRS network such that information generated by the SGSN and GGSN is relayed to the game service provider.

### CHARACTERIZATION OF THE INVENTION

In order to solve the above mentioned disadvantages, the invention has developed a new system to obtain value-added services in real-time based on the General Packet Radio Service (GPRS) network, which comprises SGSN and GGSN nodes to enable the access from a mobile station to different data networks, using the radio access of a GSM or UMTS network; wherein between the SGSN and GGSN nodes the invention comprises means to handle GTP protocol data packets, and wherein the GTP messages traffic, which would have otherwise flowed directly between the SGSN and the GGSN nodes, is diverted through said means. When said means detect a GTP message from an SGSN asking a GGSN for the establishment of a GTP tunnel for a PDP context, said means establish instead two GTP tunnels: one between the invention system and the SGSN and the other between the invention system and the GGSN. Once established, the user data packets will arrive through one of the two tunnels associated to their PDP Context and will be transferred to the other tunnel. These two tunnels use the same one of the two tunnels associated to their PDP Context and will be transferred to the other tunnel. These two tunnels use the same identification parameter "Tunnel ID" that would have been used by the GTP tunnel that would have been established between the SGSN and GGSN, had the invention not intervened. Therefore, the invention system can access all the information of the PDP Contexts diverted through it.

The invention also comprises means for execution of local or remote applications in which a data configuration module has been provided to activate remote or local applications corresponding to the service required; all this in terms of the information flowing through the "PDP Contexts" that go through the invention system and of the data that has been configured.

The invention system also comprises means for application management, to access the activated application and return the response obtained from such application to the means of execution of local or remote applications, which from the response received determine possible modifications to be made to the PDP Contexts or to certain GTP messages in particular and instruct the means that handle data packets to modify the messages according to the result obtained from the application that was activated, sending the possible result to the original destination (SGSN or GGSN).

The means that handle data packets comprise a GGSN module to capture and interpret the messages originally sent from the SGSN node and to send the messages addressed to an SGSN. Furthermore, said means that handle data packets comprise an SGSN module to capture and interpret the messages originally sent from a GGSN node and to send the messages addressed to a GGSN. This structure has the advantage of the system performing its functions transparently for the SGSN and GGSN nodes, since they do not intervene in the process.

In order to allow the functionality mentioned above, both the GGSN module and the SGSN module comprise means of decoding/coding to capture and interpret messages originally sent in any of the two directions in which the message can be sent, that is, sent from an SGSN node to a GGSN node or vice versa.

Moreover, the means that handle data packets have an access module to the means of execution of local or remote applications to which they deliver the decoded information, in order to allow the result of the invocation of local or remote applications to modify data packets originally captured, and said access module also delivers the original information with the modification obtained according to the instructions received from the means of execution of local or remote applications, to be sent to the GGSN or SGSN node, depending on the direction in which the information is flowing.

The means of execution of local or remote applications comprise a process module which accesses the data configuration module, which together with the data previously decoded, extracted from the original information, determine the application that needs to be accessed.

The means of execution of local or remote applications also comprise an application module which calls and activates the application, which is defined by the process module as described above.

Regarding the means of application management stated above, it must be noted that said means comprise an interface for each external application, for which said means implement the communication protocol required for each application.

In the case of a local application, this can be implemented in an internal database from which the modification to be made is obtained.

The value-added services are based on the analysis of GTP protocol data packets, both of GTP packets with signaling messages and of GTP packets with user data.

Therefore, by means of the invention system it is possible to obtain value-added services in real-time through a mobile phone network with a GPRS network, in a completely transparent way for said network.

In order to facilitate a better understanding of this description and as part of the same, a series of drawings is enclosed below in which, being illustrative and not restrictive, the aims of the invention have been represented.

### BRIEF DESCRIPTION OF THE FIGURES

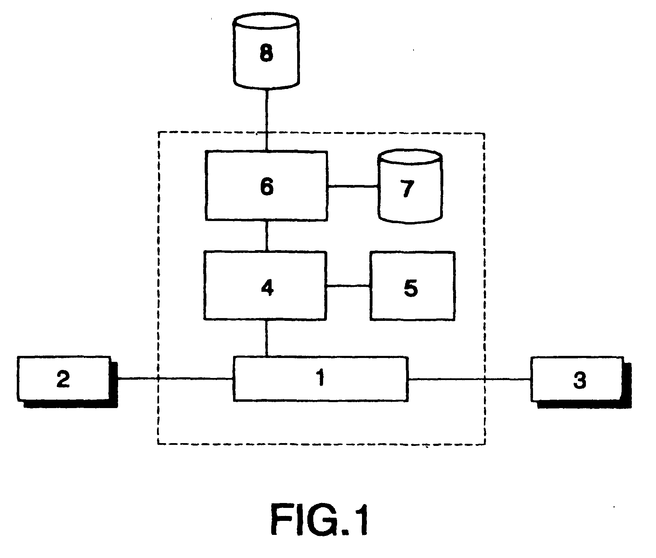

**Figure 1.-** shows a functional block diagram of a possible example of implementation of the invention system.

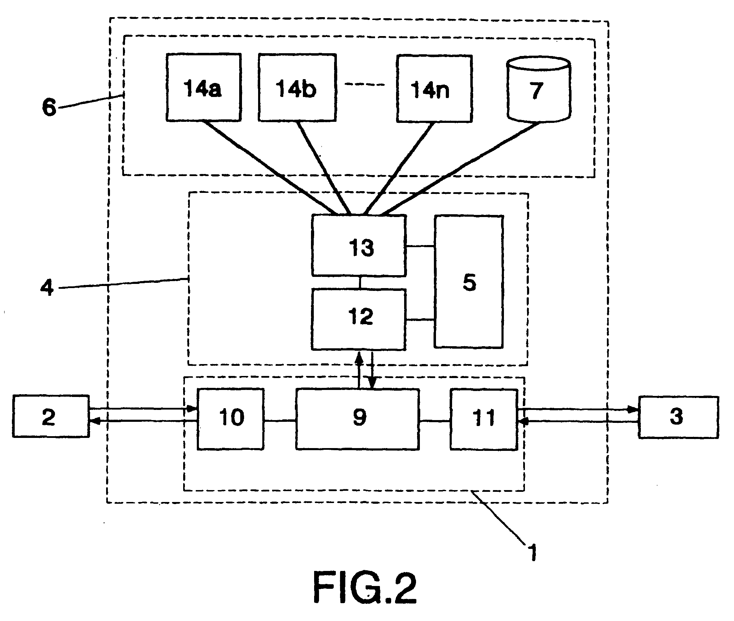

**Figure 2.-** shows the functional block diagram of the previous figure but with the difference that the main modules for each of the blocks in the previous figure have been added.

### DESCRIPTION OF THE INVENTION

Following is a description of the invention based on the above-mentioned figures.

As stated above, it is well known to use the GPRS service in GSM or UMTS networks, for which the GSM or UMTS network operator incorporates SGSN nodes 2, which are in charge of the management of radio access and localization of mobile stations, and GGSN nodes 3, which are the gateway between the operator data core network and the external data networks, so that access to such external networks is allowed from a mobile station, for which a bidirectional exchange of information is produced between the SGSN nodes 2 and the GGSN nodes 3.

The invention allows obtaining value-added services in the described structure in a completely transparent way for the SGSN 2 and GGSN 3 nodes.

For this, between the SGSN node 2 and the GGSN node 3 a block 1 has been provided that captures the GTP protocol data packets and sends them to a block 4 for the execution of local or remote applications, which comprises a data configuration module 5 and which is also connected to an application management block 6, so that, by means of block 4, and starting from the captured data packet and the data configured in the data configuration module 5, the application corresponding to the service required is obtained, and the information is delivered to block 6, which accesses the remote application 8 or local application 7, from which it obtains the required information, detecting the possible changes to be introduced in the original information, and instructs block 1 to carry out said possible modification and to finally send, or not send, the result to its original destination (SGSN node 2 or GGSN node 3).

In order for block 1 to capture the GTP protocol data packets, it is fitted with a GGSN module 10 which captures and interprets GTP messages originally sent from an SGSN node 2 with destination to a GGSN node 3, and which also sends response messages to an SGSN node 2 with the same format as a GGSN node 3. In particular, this module is capable of establishing a GTP tunnel with an SGSN node 2.

Likewise, block 1 has an SGSN module 11 which captures messages from a GGSN node 3 as if it was an SGSN node 2. In particular, this module is capable of establishing a GTP tunnel with a GGSN node 3.

In order to implement the functions mentioned, modules 10 and 11 comprise the corresponding decoder/coder to capture and interpret original messages sent in any of the two directions, which are based on the analysis of GTP signaling or also on the analysis of data packets.

Block 1 also has an access module 9 to block 4, which extracts the information provided by modules 10 and 11 and transfers it to said block 4 for its process, and it also receives commands to modify the GTP message captured in any of the two directions.

Regarding block 4, said block has a process module 12 which collects information from access module 9 which accesses data configuration module 5 and from which, according to the configuration programmed and the data obtained, obtains the specific application to be invoked. Therefore, process module 12, once the specific application to be invoked is obtained, transfers the information to an application module 13 which calls and activates the management application module 6.

Regarding this application management block 6, it must be noted that this block comprises a set of interfaces 14a-14n to the various applications 8 which reside outside, or to internal applications 7 provided in the application management module 6.

Each of the interfaces 14a-14n implements the communication protocol required for the specific application. An example of these interfaces is the INAP protocol (signaling protocol used by services based on intelligent network) with an SCP (platform on which the services for intelligent network are executed) or the ISUP protocol (signaling protocol based on ISDN) with a service node.

Internal applications 7 allow, for example, to deal with a query to a database: a possibility would be the use of a unique APN (user parameter which specifies the external network to which the customer wants to access when each GPRS data session is established) for all users and applications, which facilitates the configuration of GPRS connections to customers. In this case, the invention system is the one taking the decision of the real external network which the customer has to access by modifying the initial APN in terms of, for example, the MSISDN (phone number of mobile station) or MSISDN range of the subscription, the user identity introduced, etc. This new APN (real APN) is sent to the GGSN node 3 that allows access to that network, being transparent to this last node during all of the process. The invention system is in charge of invoking the corresponding application in each case as described.

A possible example of the system operation is explained below, which consists of a company that provides access to its intranet through GPRS. This company also wishes to control the length of the GPRS data sessions established by its employees, and should these sessions exceed a certain volume of connection hours, the access to the service will be restricted. The APN used by the employees to connect to GPRS is previously established in the DNS (Domain Name System) of the SGSN node 2 in which the IP (Internet Protocol) address of the invention system node is assigned to the APN. This way, when the address corresponding to the company is placed, the message is sent from the SGSN node 2 to the invention system. This message is called "Create PDP Context Request" which comprises the following information: APN, MSISDN, signaling for SGSN addressing, and user traffic for SGSN addressing. This information is collected by the GGSN module 10 decoding the information to transfer it to the access module 9.

Module 9 in turn transfers the information to the process module 12 which receives the information and queries the configuration data. In this case, such data specify that every time that the APN of the mentioned company is used, a query must be made to an SCP through, for example, application 14b. The same data also specify that in that query the MSISDN must be used as input parameter.

The process module 12 accesses the application module 13 which invokes the corresponding interface. In this case the interface 14b. This interface arranges the corresponding protocol to access an SCP. This INAP protocol or CAP protocol (protocol for intelligent network services, with functionalities similar to INAP, but adapted to mobile environment), is used to query the SCP if the user has reached the limit of connection hours.

The answer to the query (positive or negative) is collected by the module 13, which in turn queries the data configuration module 5 to determine what to do in each case. These data are preconfigured so that for the APN of the company in question, if the answer has been that the number of hours has not been exceeded, the invention system must remain involved in the signaling messages, but not in the traffic messages (since in this case, the interest lies in controlling the session length and not the traffic volume).

Should the answer show that the maximum of hours has been exceeded, the configuration data specify that the connection must be interrupted.

The result of all this analysis is transferred to the process module 12, which translates everything previously decided to the GTP protocol. Therefore, it is allowed to continue establishing the data session, and the new value of the signaling parameter for SGSN addressing is the IP address corresponding to the invention system.

The access module 9, on the information initially collected, makes all the required modifications on the information elements as a result of the application execution (in this case only the value of the signaling parameter for SGSN addressing). The module 9 contacts the SGSN module 11 if the data session has been allowed to continue, and the GGSN function 10 if the session must be immediately interrupted.

Straight afterwards, the SGSN module 11 composes the message to be sent to the GGSN node to continue the establishment of the data session, according to the specification stated in the signaling "Create PDP Context Request", in which the APN, MSISDN, and addressing of SGSN user traffic are kept, and the signaling parameter of SGSN addressing is modified, stating the address of the node of the invention system.

The GGSN node 3 receives this information as if it was any other SGSN 2, and accesses the company intranet marked by the APN.

## Claims

1. **A SYSTEM TO OBTAIN VALUE-ADDED SERVICES IN REAL-TIME, BASED ON THE GENERAL PACKET RADIO SERVICE NETWORK,** wherein the system comprises SGSN nodes (2) which control the radio access and the localization of a mobile station, and GGSN nodes (3) which allow the connection between the internal network of the mobile network operator and other external networks, using the GTP protocol; all this to enable the access from the mobile station to various data networks; the system comprises means (1) which handle data packets of the GTP protocol and towards which the GTP message traffic is diverted, traffic that would have normally flowed directly between an SGSN node (2) and a GGSN (3) node, said means (1) establishing one GTP tunnel with the SGSN node (2) and another GTP tunnel with the GGSN node (3) for each PDP Context, thereby being able to process the traffic in the intercepted PDP Context; **characterized in that** the means (1) that handle data packets of the GTP protocol forward the captured GTP messages to means of execution (4) of local or remote applications in which a module for data configuration (5) has been provided, in order to activate remote (8) or local (7) applications, corresponding to the required service, as a function of the messages captured and the data configured.

2. The system according to claim 1, wherein the system further comprising means of application management (6) to access the activated application (7 or 8) and return the response obtained from such application to the means (4) of execution of local or remote applications, which, from such response, detect the possible modifications to be made on the GTP messages and instruct the means (1) that handle data packets to perform the possible message modification depending on the result obtained in the application being activated, before sending the resulting, possibly modified, data packet to its original destination.

3. **The system** according to claim 1, wherein the means handling data packets comprise a GGSN module (10) to capture and interpret messages originally sent from the SGSN node (2), to send the messages addressed to an SGSN node (2) and to establish GTP tunnels with the SGSN node (2), and an SGSN module (11) to capture and interpret messages originally sent from a GGSN node (3), to send the messages addressed to a GGSN node (3) and to establish GTP tunnels with the GGSN node (3), all this in a transparent way for the SGSN (2) and GGSN (3) nodes.

4. The system according to claim 3, wherein the GGSN module (10) and the SGSN module (11) comprise means of decoding/coding to capture and interpret messages originally sent in any of the two directions in which the message can be sent.

5. The system according to claim 4, wherein the means (1) handling GTP data packets further comprise an access module (9) to means of execution of local or remote applications to which they give the decoded information and further receive the invocation result obtained in the local or remote applications, modifying the data packets originally captured before sending them to the GGSN (3) or SGSN (2) node.

6. The system according to claim 2, wherein the means of execution of local or remote applications comprise a process module (12) which accesses the data configuration module (5), in which, together with the decoded data previously extracted from the original information, defines the application desired to be accessed.

7. The system according to claim 6, wherein the means (4) of execution for local or remote applications comprise an application module (13) which calls and activates the defined application.

8. The system according to claim 2, wherein the means of application management (6) comprise an interface (14a-14n) for each external application (8), for which such means implement the communication protocol required for each application.

9. The system according to claim 2, wherein the local application can be implemented in an internal database (7) from which the modification to be made is obtained.

10. The system according to any of the above claims, wherein the services are based on the analysis of the GTP protocol data packets, protocol for GPRS tunnels, both of GTP packets with signaling messages and of GTP packets with user messages.

11. The system according to any of the above claims, wherein the system can be also used for value-added services which are not in real-time.

## Patentansprüche

1. System zur Gewinnung von Mehrwertdiensten in Echtzeit, das auf dem allgemeinen paketorientierten Funkdienst, GPRS, beruht, wobei das System SGSN-Knoten (2), die den Funkzugang und die Lokalisierung einer mobilen Station steuern, und GGSN-Knoten (3) aufweist, die eine Verbindung zwischen dem internen Netz des Mobilfunknetzbetreibers und anderen externen Netzen ermöglichen, die das GTP-Protokoll nutzen; all dies, um den Zugang von der mobilen Station zu verschiedenen Datennetzen zu ermöglichen; wobei das System Einrichtungen aufweist, (1) die Datenpakete des GTP-Protokolls verarbeiten und zu denen der GTP-Nachrichtenverkehr umgeleitet wird, der normalerweise direkt zwischen einem SGSN-Knoten (2) und einem GGSN-Knoten (3) geflossen wäre, wobei die Einrichtungen (1) für jeden PDP-Kontext einen GTP-Tunnel mit dem SGSN-Knoten (2) und einen weiteren GTP-Tunnel mit dem GGSN-Knoten (3) einrichten und **dadurch** in der Lage sind, den Verkehr in dem aufgefangenen PDP-Kontext zu verarbeiten; **dadurch gekennzeichnet, daß** die Einrichtungen (1), die Datenpakete des GTP-Protokolls verarbeiten, die aufgefangenen GTP-Mitteilungen zu Ausführungseinrichtungen (4) von lokalen oder entfernten Anwendungen weiterleiten, in denen ein Modul für Datenkonfiguration (5) bereitgestellt worden ist, um entsprechend dem erforderlichen Dienst entfernte (8) oder lokale (7) Anwendungen in Abhängigkeit von den aufgefangenen Mitteilungen und den konfigurierten Daten zu aktivieren.

2. System nach Anspruch 1, wobei das System ferner Einrichtungen zur Anwendungsverwaltung (6) aufweist, um auf die aktivierte Anwendung (7 oder 8) zuzugreifen und die von dieser Anwendung erhaltene Reaktion zu den Einrichtungen (4) zur Ausführung von lokalen oder Fernanwendungen zurückzusenden, die aus dieser Reaktion die möglichen Modifikationen erfassen, die an den GTP-Mitteilungen auszuführen sind, und die Datenpakete verarbeitenden Einrichtungen (1) anweisen, in Abhängigkeit von dem bei der gerade aktivierten Anwendung erhaltenen Ergebnis die mögliche Mitteilungsmodifikation auszuführen, bevor das resultierende, möglicherweise modifizierte Datenpaket zu seinem ursprünglichen Ziel gesendet wird.

3. System nach Anspruch 1, wobei die Datenpakete verarbeitenden Einrichtungen aufweisen: ein GGSN-Modul (10) zum Auffangen und zur Interpretation von Mitteilungen, die ursprünglich vom SGSN-Knoten (2) gesendet wurden, zum Senden der an einen SGSN-Knoten (2) adressierten Mitteilungen und zum Einrichten von GTP-Tunneln mit dem SGSN-Knoten (2) sowie ein SGSN-Modul (11) zum Auffangen und zur Interpretation von Mitteilungen, die ursprünglich von einem GGSN-Knoten (3) gesendet wurden, zum Senden der an einen GGSN-Knoten (3) adressierten Mitteilungen und zum Einrichten von GTP-Tunneln mit dem GGSN-Knoten (3), all dies auf eine für die SGSN (2)- und GGSN (3)-Knoten durchsichtige Weise.

4. System nach Anspruch 3, wobei das GGSN-Modul (10) und das SGSN-Modul (11) eine Einrichtung zum Decodieren/Codieren aufweisen, um Mitteilungen aufzufangen und zu interpretieren, die ursprünglich in eine der beiden Richtungen gesendet wurden, in welche die Mitteilung gesendet werden kann.

5. System nach Anspruch 4, wobei die GTP-Datenpakete verarbeitenden Einrichtungen (1) ferner ein Zugangsmodul (9) zu Ausführungseinrichtungen für lokale oder Fernanwendungen aufweisen, an die sie die decodierten Informationen übergeben, und ferner das bei den lokalen oder Fernanwendungen erhaltene Aufrufergebnis empfangen und die ursprünglich aufgefangenen Datenpakete modifizieren, bevor sie diese zu dem GGSN- (3) oder SGSN-Knoten (2) senden.

6. System nach Anspruch 2, wobei die Einrichtungen zur Ausführung von lokalen oder Fernanwendungen ein Verarbeitungsmodul (12) aufweisen, das auf das Datenkonfigurationsmodul (5) zugreift, in dem es zusammen mit den vorher extrahierten decodierten Daten aus der ursprünglichen Information die Anwendung definiert, auf die zugegriffen werden soll.

7. System nach Anspruch 6, wobei die Einrichtungen (4) zur Ausführung von lokalen oder Fernanwendungen ein Anwendungsmodul (13) aufweisen, das die definierte Anwendung aufruft und aktiviert.

8. System nach Anspruch 2, wobei die Einrichtungen zur Anwendungsverwaltung (6) eine Schnittstelle (14a-14n) für jede externe Anwendung (8) aufweisen, für die diese Einrichtungen das für jede Anwendung erforderliche Kommunikationsprotokoll implementieren.

9. System nach Anspruch 2, wobei die lokale Anwendung in einer internen Datenbank (7) implementiert werden kann, von der man die auszuführende Modifikation erhält.

10. System nach einem der vorstehenden Ansprüche, wobei die Dienste auf der Analyse der GTP-Protokoll-Datenpakete, des Protokolls für GPRS-Tunnel sowohl von GTP-Paketen mit Kennzeichennachrichten als auch von GTP-Mitteilungen mit Anwendernachrichten basieren.

11. System nach einem der vorstehenden Ansprüche, wobei das System auch für Mehrwertdienste benutzt werden kann, die nicht in Echtzeit erfolgen.

## Revendications

1. Système destiné à obtenir des services à valeur ajoutée en temps réel, basé sur le réseau de service général de radio par paquets (GPRS), dans lequel le système comprend des noeuds (2) SGSN (noeud support GPRS de serveur) qui commandent l'accès radio et la localisation d'un poste mobile, et des noeuds (3) GGSN (noeud support GPRS de passerelle) qui permettent la connexion entre le réseau interne de l'opérateur de réseau mobile et d'autres réseaux externes, en utilisant le protocole GTP (protocole d'encapsulation de GPRS) ; tout ceci pour permettre l'accès du poste mobile à divers réseaux de données ; dans lequel le système comprend des moyens (1) qui manipulent des paquets de données du protocole GTP et vers lesquels le trafic de messages de GTP est renvoyé, trafic qui aurait normalement circulé directement entre un noeud SGSN (2) et un noeud GGSN (3), lesdits moyens (1) établissant un tunnel de GTP avec le noeud SGSN (2) et un autre tunnel de GTP avec le noeud GGSN (3) pour chaque contexte de PDP, en étant ainsi capables de traiter le trafic dans le contexte de PDP intercepté ; **caractérisé en ce que** les moyens (1) qui manipulent les paquets de données du protocole GTP acheminent les messages de GTP captés jusqu'à des moyens (4) d'exécution d'applications locales ou distantes dans lesquels un module (5) de configuration de données a été prévu, afin d'activer des applications distantes (8) ou locales (7), correspondant au service voulu, en fonction des messages captés et des données configurées.

2. Système selon la revendication 1, dans lequel le système comprend en outre des moyens de gestion (6) d'applications pour accéder à l'application activée (7 ou 8) et pour renvoyer la réponse obtenue de cette application aux moyens (4) d'exécution d'applications locales ou distantes, lesquels, à partir de cette réponse, détectent les modifications possibles à faire sur les messages de GTP et ordonnent aux moyens (1) qui manipulent les paquets de données d'effectuer la modification possible de message en fonction du résultat obtenu dans l'application qui est activée, avant d'envoyer le paquet de données résultant, éventuellement modifié, à sa destination d'origine (SGSN ou GGSN).

3. Système selon la revendication 1, dans lequel les moyens de manipulation de paquets de données comprennent un module (10) de GGSN pour capter et interpréter des messages envoyés à l'origine depuis le noeud SGSN (2), pour envoyer les messages adressés à un noeud SGSN (2) et pour établir des tunnels de GTP avec le noeud SGSN (2), et un module (11) de SGSN pour capter et interpréter des messages envoyés à l'origine depuis un noeud GGSN (3), pour envoyer les messages adressés à un noeud GGSN (3) et pour établir des tunnels de GTP avec le noeud GGSN (3), tout ceci d'une façon transparente pour les noeuds SGSN (2) et GGSN (3).

4. Système selon la revendication 3, dans lequel le module (10) de GGSN et le module (11) de SGSN comprennent des moyens de décodage/codage pour capter et interpréter des messages envoyés à l'origine dans l'une quelconque des deux directions dans lesquelles le message peut être envoyé.

5. Système selon la revendication 4, dans lequel les moyens (1) manipulant les paquets de données de GTP comprennent en outre un module (9) d'accès au moyen d'exécution d'applications locales ou distantes auquel ils donnent l'information décodée et reçoivent en outre le résultat d'appel obtenu dans les applications locales ou distantes, en modifiant les paquets de données captés à l'origine avant de les envoyer au noeud GGSN (3) ou SGSN (2).

6. Système selon la revendication 2, dans lequel les moyens d'exécution d'applications locales ou distantes comprennent un module (12) de traitement qui accède au module (5) de configuration de données, où, conjointement avec les données décodées extraites préalablement de l'information d'origine, il définit l'application à laquelle on souhaite accéder.

7. Système selon la revendication 6, dans lequel les moyens (4) d'exécution pour les applications locales ou distantes comprennent un module (13) d'applications qui appelle et active l'application définie.

8. Système selon la revendication 2, dans lequel les moyens (6) de gestion d'applications comprennent une interface (14a à 14n) pour chaque application externe (8), pour laquelle ces moyens mettent en oeuvre le protocole de communication voulu pour chaque application.

9. Système selon la revendication 2, dans lequel l'application locale peut être mise en oeuvre dans une base de données interne (7) de laquelle on obtient la modification à faire.

10. Système selon l'une quelconque des revendications précédentes, dans lequel les services sont basés sur l'analyse des paquets de données de protocole de GTP, du protocole pour les tunnels de GPRS, à la fois des paquets de GTP avec des messages de signalisation et des paquets de GTP avec des messages d'utilisateur.

11. Système selon l'une quelconque des revendications précédentes, dans lequel le système peut aussi s'utiliser pour des services à valeur ajoutée qui ne sont pas en temps réel.
